Europäisches Patentamt
European Patent Office
Office européen des brevets

(11) Publication number: **0 279 264 A2**

# EUROPEAN PATENT APPLICATION

(21) Application number: **88101389.0**

(51) Int. Cl.⁴: **C08F 283/00**

(22) Date of filing: **01.02.88**

(30) Priority: **20.02.87 IT 1943587**

(43) Date of publication of application:
**24.08.88 Bulletin 88/34**

(84) Designated Contracting States:
**AT BE CH DE ES FR GB GR IT LI LU NL SE**

(71) Applicant: **CONSIGLIO NAZIONALE DELLE RICERCHE**
**Piazzale Aldo Moro, 7**
**I-00185 Roma(IT)**

(72) Inventor: **Pezzin, Giovanni**
**Via Ungheria 17 A**
**San Giorgio delle Pertiche Padova(IT)**
Inventor: **Palma, Giancarlo**
**Via Cappuccina 38**
**Venezia-Mestre(IT)**
Inventor: **Carenza, Mario**
**Via Gregorio Barbarigo 14**
**Padova(IT)**
Inventor: **Minto, Francesco**
**Via Silvio Trentin**
**Mestre Venezia(IT)**
Inventor: **Lora, Silvano**
**Via Giobatta Valvasori 1**
**Padova(IT)**

(74) Representative: **Gervasi, Gemma, Dr.**
**NOTARBARTOLO & GERVASI Srl 33, Viale Bianca Maria**
**I-21100 Milano(IT)**

## (54) Hydrophylic vinyl monomer-phosphazene polymer graft copolymerization process.

(57) By means of an ionizing or ultraviolet irradiation process, hydrophilic vinyl monomers are grafted onto phosphazene polymers containing repetitive units represented by $-\!(\!-\overset{|}{\underset{|}{P}}=N-\!)\!-$, in which substituted or unsubstituted alkoxy and aryloxy groups are bonded directly to the phosphorus atom.

EP 0 279 264 A2

# HYDROPHILIC VINYL MONOMER-PHOSPHAZENE POLYMER GRAFT COPOLYMERIZATION PROCESS

This invention relates to a copolymerization process for grafting hydrophilic vinyl monomers onto phosphazene polymers.

More particularly, the invention relates to a process consisting of subjecting to corpuscular or electromagnetic ionizing radiation or to ultraviolet radiation a system comprising a polyphosphazene in suitable form immersed in a solution consisting of the hydrophilic vinyl monomer and a suitable solvent or mixture of solvents. However the monomer-solvent mixture must not dissolve the polymer, but at the most swell it.

For suitability for the reaction, the polyphosphazene can be in powder form, in the form of a thin film or in the form of thin tubes.

The polyphosphazenes on which the graft copolymerization according to the present invention is conducted comprise repetitive units represented by the general formula:

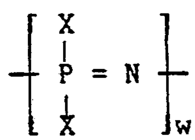 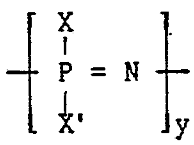 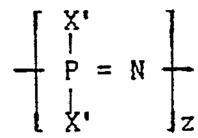

where X represents a substituted or unsubstituted aryloxy group and X′ represents a group equal to X or a substituted or unsubstituted alkoxy group, the sum (w + y + z) being between 20 and 50000.

Preferred examples of polyphosphazenes are: poly [(bis-4-methylphenoxy)phosphazene] and poly [(bis-4-cumylphenoxy) phosphazene] in which X and X′ are equal and are represented by (1) and (2) respectively:

(1)

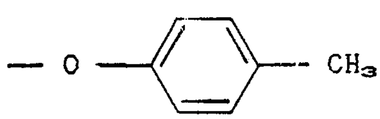

(2)

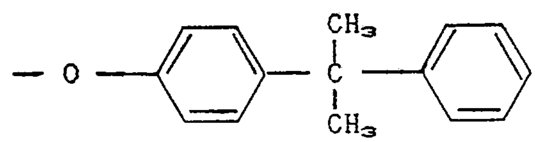

Preferred examples of hydrophilic vinyl monomers for grafting onto the polyphosphazene are N-vinyl-2-pyrrolidone, acrylamide, 2-hydroxyethylacrylate, 2-hydroxyethylmethacrylate, methoxy polyethyleneglycol methacrylate, sodium styrenesulphonate or mixtures of these monomers.

Suitable solvents for the hydrophilic monomer are water, methanol, ethanol, benzene, toluene or other organic solvents. The weight ratio of hydrophilic vinyl monomer to solvent is generally between 0.1 and 1; the weight ratio of hydrophilic vinyl monomer to polyphosphazene is not critical, but the polyphosphazene must be completely immersed in the monomer-solvent solution.

The reaction is conducted either under vacuum or in an inert gas atmosphere (eg. nitrogen). The reaction temperature is not cirtical but must be less than that which would produce irreversible alterations in the form of the polymer, ie less than 50°C. Preferably, the reaction is carried out at ambient temperature.

Radioisotopes such as Co-60, Cs-137 or other gamma ray sources, electron accelerators or ultraviolet ray sources can be used for the irradiation.

The irradiation is effected at a dose rate of between 0.01 and 3.0 Gy/sec, with a total dose of between 1 and 50 kGy.

The procedure is preferably carried out by adding to the system to be irradiated a homopolymerization inhibitor for the hydrophilic vinyl monomer to be grafted, in order to increase the graft yield. Suitable homopolymerization inhibitors are cupric chloride, ferric sulphate, ferrous sulphate, trivalent cerium chloride, zinc chloride and stannic chloride in concentrations from $10^{-5}$ to $10^{-2}$ moles per litre of solvent.

On termination of the reaction the unreacted vinyl monomer and the homopolymer which forms are extracted by treatment with methanol. The formed graft copolymer is dried under vacuum.

The graft copolymers obtained in this manner can be used as materials for biological applications such as prostheses, valves, blood vessels and as membrane materials.

By way of non-limiting illustration of the process according to the invention some examples are given hereinafter in which the graft yield has been calculated as $\frac{P - Po}{P}$ in which P is the weight of the copolymer at the end of the reaction and Po is the initial weight of the phosphazene polymer.

EXAMPLE 1

A poly [(bis-4-methylphenoxy)phosphazene] film of approximate dimensions 3 x 1 cm and ~300µm thickness and weighing 103 mg is completely immersed in a liquid mixture consisting of 5 g of N-vinyl-2-pyrrolidone and 5 g of $H_2O$ and $Cu(NO_3)_2$ at a concentration of $5 \times 10^{-3}$ M and left to swell overnight. After deaerating the solution by bubbling nitrogen through it, it is irradiated with a Co-60 gamma radiation source at a temperature of 20°C and a dose rate of 0.50 Gy/sec to a total dose of 5 kGy. After irradiation it is treated with methanol to remove the residual monomer and the formed homopolymer. The graft yield is 26.3%. The appearance of the sample passes from transparent film to a uniformly whitish opaque film.

EXAMPLE 2

A poly [(bis-4-cumylphenoxy)phosphazene] film of approximate dimensions 3.5 x 1 cm and ~250µm thickness and weighing 79.4 mg is completely immersed in a liquid mixture consisting of 2 g of methoxytriglycol methacrylate and 4 g of pure methanol and left to swell overnight. After deaerating the solution by bubbling nitrogen through it, it is irradiated with a Co-60 radiation source at a temperature of 20°C and a dose rate of 0.50 Gy/sec to a total dose of 8 kGy. After irradiation it is treated with methanol to remove the residual monomer and the formed homopolymer. The graft yield is 16%. The appearance of the sample passes from transparent film to a uniformly white opaque film.

EXAMPLE 3

A poly [(bis-4-cumylphenoxy)phosphazene] film of approximate dimensions 3 x 1 cm and ~250µm thickness and weighing 83 mg is completely immersed in a liquid mixture consisting of 5 g of N-vinyl-2-pyrrolidone and 5 g of $H_2O$ and $Cu(NO_3)_2$ at a concentration of $5 \times 10^{-3}$ M and left to swell overnight. After deaerating the solution by bubbling nitrogen through it, it is irradiated by a Co-60 gamma radiation source at a temperature of 20°C and a dose rate of 0.05 Gy/sec to a total dose of 3 kGy. After irradiation it is treated with methanol to remove the residual monomer and the formed homopolymer. The graft yield is 14%. The copolymer is of uniform white opaque appearance.

EXAMPLE 4

A poly [(bis-4-methylphenoxy)phosphazene] film of approximate dimensions 3 x 1 cm and ~250µm thickness and weighing 78 mg is completely immersed in a liquid mixture consisting of 2 g of methoxytriglycol methacrylate and 4 g of pure methanol and left to swell overnight. After deaerating the solution by bubbling nitrogen through it, it is irradiated with a Co-60 gamma radiation source at a temperature of 20°C and a dose rate of 0.50 Gy/sec to a total dose of 5.5 kGy. After irradiation it is treated with methanol to remove the residual monomer and the formed homopolymer. The graft yield is 22.3%. The appearance of the sample passes from transparent film to a uniformly white opaque film.

EXAMPLE 5

A poly [(bis-4-methylphenoxy)phosphazene] film of approximate dimensions 3 x 1 cm and ~250µm thickness and weighing 77 mg is completely immersed in a liquid mixture consisting of 3 g of 2-hydroxyethyl methacrylate and 3 g of pure methanol and left to swell overnight. After deaerating the

solution by bubbling nitrogen through it, it is irradiated with a Co-60 radiation source at a temperature of 20°C and a dose rate of 0.5 Gy/sec to a total dose of 4.8 kGy. After irradiation it is treated with methanol to remove the residual monomer and the formed homopolymer. The graft yield is 75%. The appearance of the sample passes from transparent film to a uniformly white opaque film.

EXAMPLE 6

A poly [(bis-4-cumylphenoxy)phosphazene] film of approximate dimensions 4 x 1 cm and ~200µm thickness and weighing 65 mg is introduced into a quartz cell containing a liquid mixture consisting of 2 g of N-vinyl-2-pyrrolidone and 2 g of water. The film is arranged in the cell so that it adheres to an optical wall through which the system is irradiated. The film is left to swell for one day, after which the solution is deaerated with a stream of nitrogen. It is then irradiated at 20°C with a 900 watt Xenon lamp positioned at a distance of 40 cm for a time of 17.5 hours. After irradiation it is treated with methanol to remove the residual monomer and the poly(vinylpyrrolidone) homopolymer. The graft polymer yield is 43%. The appearance of the sample changes from that of a transparent film to a whitish uniformly opaque film.

## Claims

1. A copolymerization process for grafting hydrophilic vinyl monomers onto phosphazene polymers, characterised by subjecting to corpuscular or electromagnetic ionizing radiation or to ultraviolet radiation a system comprising a phosphazene polymer in suitable form immersed in a solution consisting of the hydrophilic vinyl monomer and a suitable solvent or mixture of solvents, in said solution the phosphazene polymer being insoluble, or at the most swellable.

2. A process as claimed in claim 1, characterised in that said phosphazene polymer is in powder form, in the form of a thin film or in the form of thin tubes.

3. A process as claimed in claim 1, characterised in that said phosphazene polymer consists of repetitive units represented by the general formula:

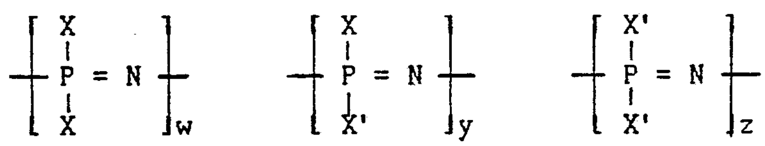

where X represents a substituted or unsubstituted aryloxy group and X' represents a group equal to X or a substituted or unsubstituted alkoxy group, the sum (w + y + z) being between 20 and 50000.

4. A process as claimed in claim 1, characterised in that said phosphazene polymer is poly [(bis-4-methylphenoxy) phosphazene] or poly [(bis-4-cumylphenoxy)phosphazene].

5. A process as claimed in claim 1, characterised in that said hydrophilic vinyl monomer is N-vinyl-2-pyrrolidone, acrylamide, 2-hydroxyethylacrylate, 2-hydroxyethylmethacrylate, methoxy polyethyleneglycol methacrylate or sodium styrene sulphonate.

6. A process as claimed in claim 1, characterised in that said solvent is water, methanol, ethanol, benzene or toluene.

7. A process as claimed in claim 1, characterised in that the weight ratio of said hydrophilic vinyl monomer to said solvent is between 0.1 and 1.

8. A process as claimed in claim 1, characterised in that said phosphazene polymer is completely immersed in the monomer-solvent solution.

9. A process as claimed in claim 1, characterised in that the copolymerization reaction is conducted under vacuum or in an inert gas atmosphere.

10. A process as claimed in claim 1, characterised in that the copolymerization reaction is conducted at ambient temperature.

11. A process as claimed in claim 1, characterised in that the copolymerization reaction can be conducted in the presence of a homopolymerization inhibitor for the hydrophilic vinyl monomer, such as cupric chloride, ferric sulphate, ferrous sulphate, cerium chloride, zinc chloride or stannic chloride in concentrations from $10^{-5}$ to $10^{-2}$ moles per litre of solvent.

12. A process as claimed in claim 1, characterised in that radioisotopes such as Co-60, Cs-137 or electron accelerators or ultraviolet ray sources are used for said irradiation.

13. A process as claimed in claim 1, characterised in that said irradiation is administered at a dose rate of between 0.01 and 3.0 Gy/sec, with a total dose of between 1 and 50 kGy.

14. Copolymers obtained by grafting hydrophilic vinyl monomers onto polyphosphazenes as claimed in claims 1 to 13.